# EUROPEAN PATENT APPLICATION

(11) **EP 4 057 251 A1**
(43) Date of publication of application: **14.09.2022**
(21) Application number: 22158859.3
(22) Date of filing: 25.02.2022
(51) Int. Cl.: G08G 1/09

(54) **VEHICULAR DISPLAY APPARATUS**

(30) Priority: 10.03.2021 JP 2021037891
(71) Applicant: Yazaki Corporation, Minato-ku Tokyo 108-8333 (JP)
(72) Inventor: Okamoto, Shinichi, Shizuoka, 410-1194 (JP); Yoshida, Akihiro, Shizuoka, 410-1194 (JP); Matsuo, Yoshiharu, Shizuoka, 421-0407 (JP); Yamamoto, Sosuke, Shizuoka, 421-0407 (JP)
(74) Representative: Grünecker Patent- und Rechtsanwälte PartG mbB

(57) **Abstract**

A vehicular display apparatus (1) includes an obtaining unit (2) that obtains obstacle information serving as information relating to an obstacle that hinders advancing of a preceding vehicle (300), and a display (7) that displays the obstacle information in a situation where an own vehicle (100) is stopped or is moving slowly, and the preceding vehicle (300) is stopped or is moving slowly. The vehicular display apparatus (1) displays a virtual image of the obstacle information, for example, in a case where the own vehicle (100) is a first vehicle located on this side of an intersection (Cr), and the preceding vehicle (300) is located on the other side of the intersection (Cr).

## Description

### BACKGROUND OF THE INVENTION

### 1. Field of the Invention

The present invention relates to a vehicular display apparatus.

### 2. Description of the Related Art

Conventionally, a technology for providing traveling assistance has been provided. Japanese Patent Application Laid-open No. 2009-146288 discloses a traveling assistance apparatus for vehicles that determines a possibility that the own vehicle can pass through an intersection without hindering passage along a crossing road, on the basis of intersection information and preceding vehicle information.

Traveling assistance still has room for improvements. For example, if only a determination result is reported and a situation of a front side is unknown, there is a possibility that a driver will feel uneasy.

### SUMMARY OF THE INVENTION

It is an object of the present invention to provide a vehicular display apparatus that is capable of reporting a situation of a front side of a preceding vehicle to a driver.

In order to achieve the above mentioned object, a vehicular display apparatus according to one aspect of the present invention includes an obtaining unit configured to obtain obstacle information, the obstacle information being information relating to an obstacle that hinders advancing of a preceding vehicle; and a display configured to display the obstacle information in a situation where an own vehicle is stopped or is moving slowly, and the preceding vehicle is stopped or is moving slowly.

According to another aspect of the present invention, in the vehicular display apparatus, it is preferable that the obstacle information is displayed in a case where at least one condition is satisfied from among a condition that a vehicle width of the preceding vehicle is greater than or equal to a predetermined width and a condition that a vehicle height of the preceding vehicle is greater than or equal to a predetermined height.

According to still another aspect of the present invention, in the vehicular display apparatus, it is preferable that the display includes a projector that displays a virtual image of the obstacle information in such a way that the virtual image is superimposed onto the preceding vehicle, by using display light projected onto a windshield of the own vehicle.

According to still another aspect of the present invention, in the vehicular display apparatus, it is preferable that the obtaining unit obtains information relating to a further preceding vehicle that travels in front of the preceding vehicle, and the display displays a virtual image imitating the further preceding vehicle, as the virtual image of the obstacle information.

According to still another aspect of the present invention, in the vehicular display apparatus, it is preferable that the display changes at least one of a size and a display distance of the virtual image imitating the further preceding vehicle according to a degree of traffic congestion ahead of the preceding vehicle.

According to still another aspect of the present invention, in the vehicular display apparatus, it is preferable that the obtaining unit obtains a cause of traffic congestion that hinders the advancing of the preceding vehicle, and the display displays a virtual image indicating the cause of the traffic congestion, as the virtual image of the obstacle information.

According to still another aspect of the present invention, in the vehicular display apparatus, it is preferable that the vehicular display apparatus further includes a situation identifying unit that determines whether the virtual image of the obstacle information will be displayed, wherein the situation identifying unit determines to display the virtual image of the obstacle information, in a case where the own vehicle is a first vehicle that is located on this side of an intersection, and the preceding vehicle is located on another side of the intersection.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating a vehicle mounted with a vehicular display apparatus according to an embodiment;
FIG. 2 is a block diagram of the vehicular display apparatus according to the embodiment;
FIG. 3 is a diagram illustrating an example of a situation that causes a display of a virtual image of obstacle information;
FIG. 4 is a diagram illustrating an example of an image displayed by the vehicular display apparatus according to the embodiment;
FIG. 5 is a flowchart illustrating an operation of the vehicular display apparatus according to the embodiment;
FIG. 6 is a flowchart illustrating an operation of the vehicular display apparatus according to the embodiment;
FIG. 7 is a flowchart illustrating an operation of the vehicular display apparatus according to the embodiment;
FIG. 8 is a diagram illustrating a table of determination of a request gesture;
FIG. 9 is a diagram explaining a situation that requires assistance in advancing;
FIG. 10 is a diagram illustrating an example of a preceding vehicle;
FIG. 11 is a diagram illustrating a situation ahead of a preceding vehicle;
FIG. 12 is a diagram illustrating a table of determination of a space level;
FIG. 13 is a diagram illustrating a table of determination of a degree-of-danger level;
FIG. 14 is a diagram illustrating a table of determination of a comprehensive level;
FIG. 15 is a diagram illustrating an image that corresponds to a comprehensive level;
FIG. 16 is a diagram illustrating a left-turn icon;
FIG. 17 is a diagram illustrating a construction icon;
FIG. 18 is a diagram illustrating a pedestrian icon;
FIG. 19 is a diagram illustrating a table of determination of a space level according to a first variation of the embodiment;
FIG. 20 is a diagram illustrating a map according to the first variation of the embodiment; and
FIG. 21 is a diagram illustrating a table of determination of a space level according to the first variation of the embodiment.

### DETAILED DESCRIPTION OF THE PREFERRED EMBODIMENTS

A vehicular display apparatus according to an embodiment of the present invention is described in detail below with reference to the drawings. Note that the present invention is not limited to this embodiment. In addition, components in the embodiment described below include components that those skilled in the art could easily conceive of, or substantially the same components.

### Embodiment

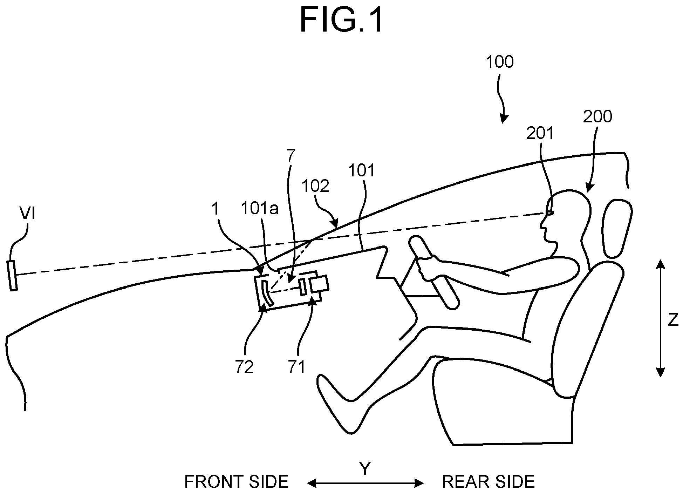

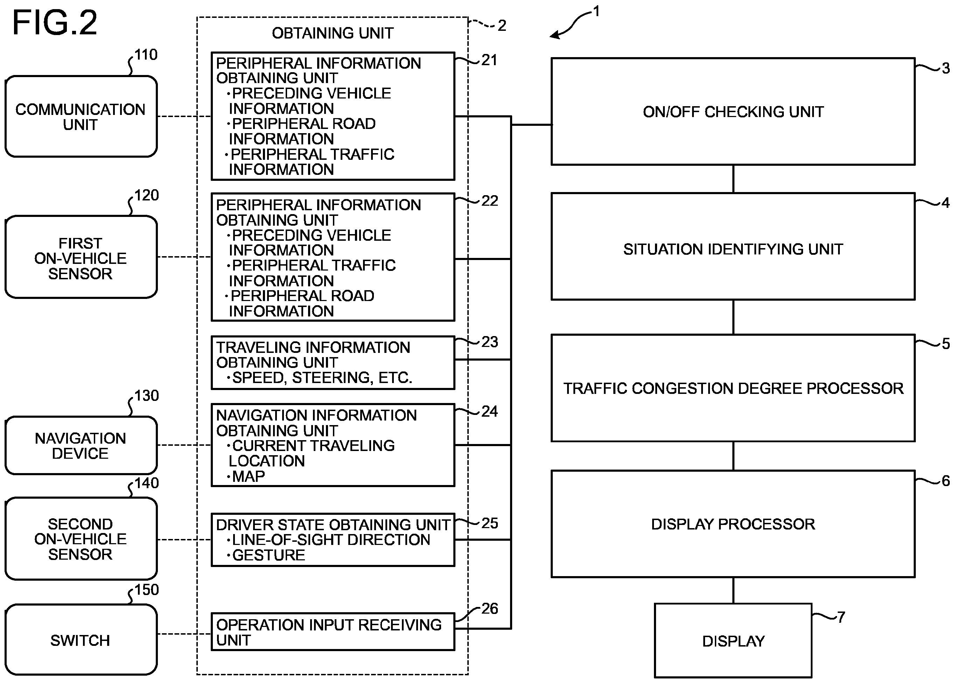

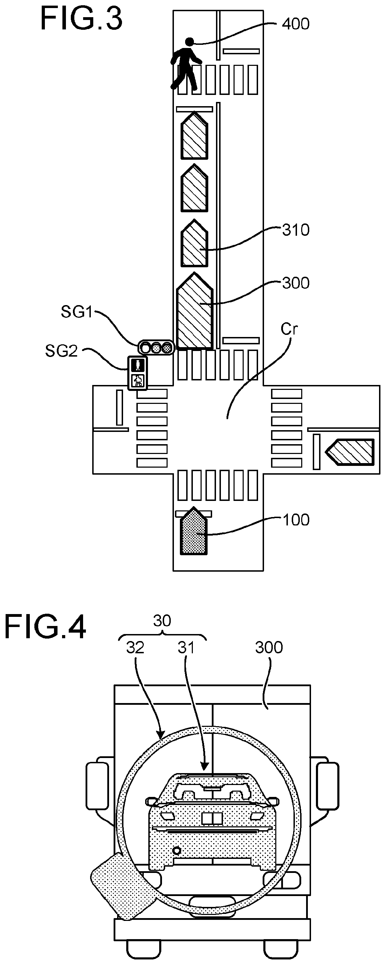

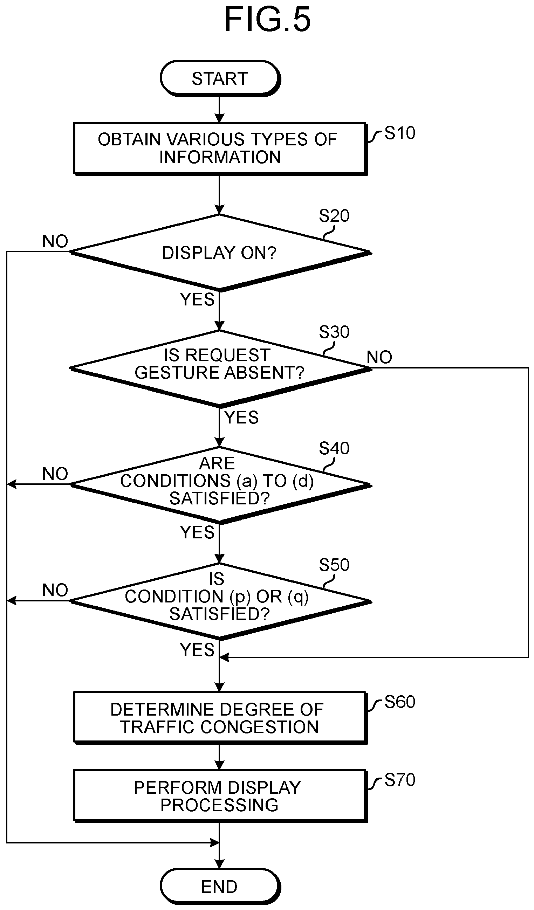

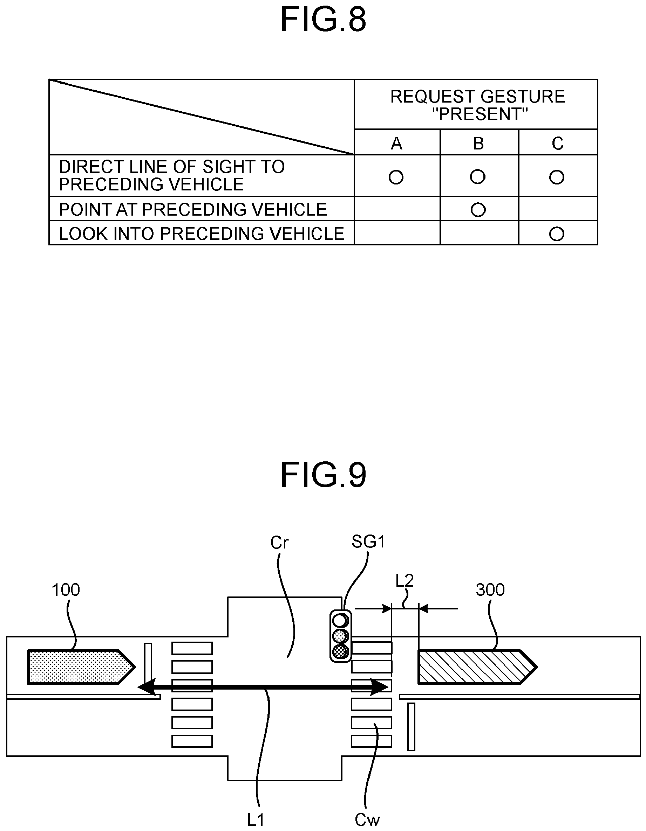

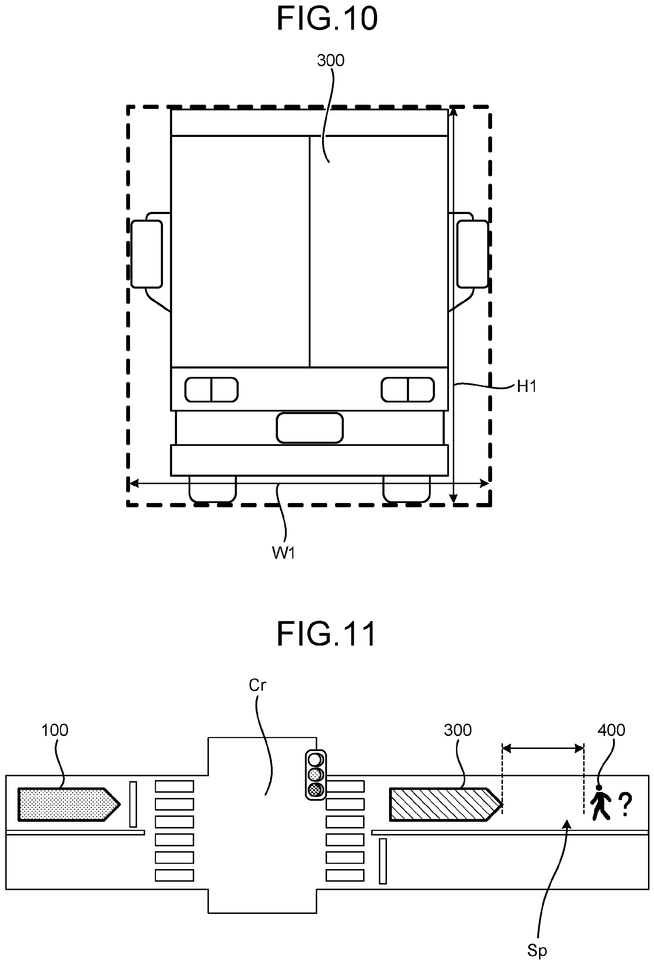

An embodiment is described with reference to FIGS. 1 to 18. The present embodiment relates to a vehicular display apparatus. FIG. 1 is a diagram illustrating a vehicle mounted with a vehicular display apparatus according to the embodiment. FIG. 2 is a block diagram of the vehicular display apparatus according to the embodiment. FIG. 3 is a diagram illustrating an example of a situation that causes a display of a virtual image of obstacle information. FIG. 4 is a diagram illustrating an example of an image displayed by the vehicular display apparatus according to the embodiment. FIGS. 5 to 7 are flowcharts illustrating an operation of the vehicular display apparatus according to the embodiment. FIG. 8 is a diagram illustrating a table of determination of a request gesture. FIG. 9 is a diagram explaining a situation that requires assistance in advancing. FIG. 10 is a diagram illustrating an example of a preceding vehicle.

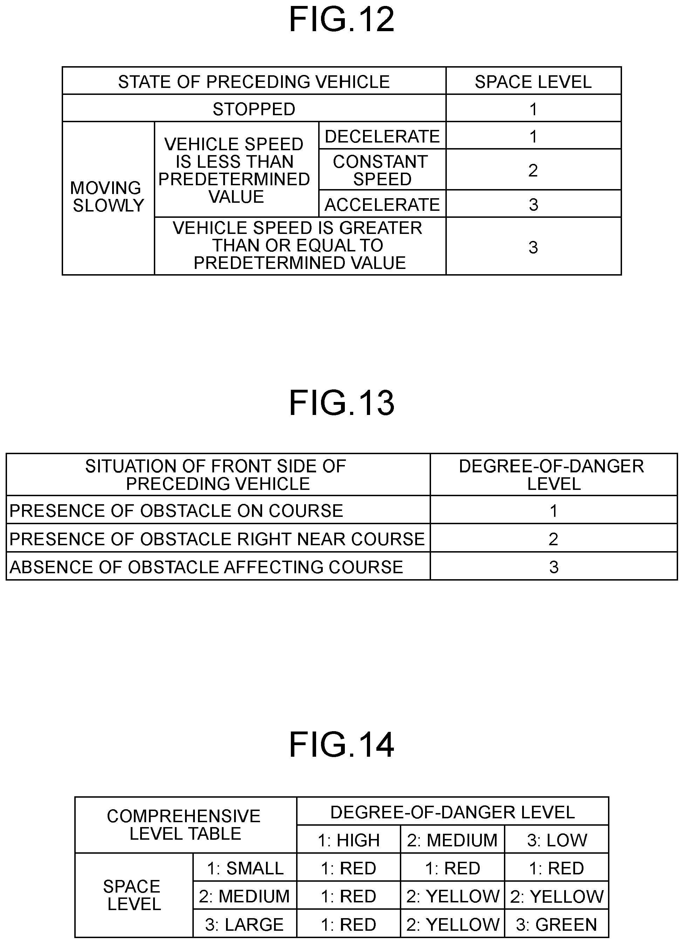

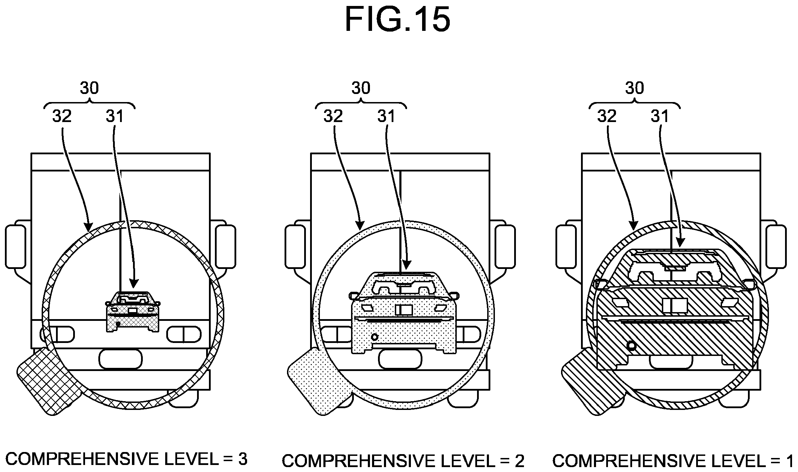

FIG. 11 is a diagram illustrating a situation of a front side of a preceding vehicle. FIG. 12 is a diagram illustrating a table of determination of a space level. FIG. 13 is a diagram illustrating a table of determination of a degree-of-danger level. FIG. 14 is a diagram illustrating a table of determination of a comprehensive level. FIG. 15 is a diagram illustrating an image that corresponds to a comprehensive level.

As illustrated in FIG. 1, a vehicular display apparatus 1 according to the embodiment is mounted on a vehicle 100. The vehicular display apparatus 1 according to the embodiment is what is called a head-up display apparatus. The vehicular display apparatus 1 displays a virtual image VI in front of an eye point 201 of the vehicle 100. The eye point 201 is a position that has been specified in advance as a point-of-view position of a driver 200 who is seated on a driver's seat.

The vehicular display apparatus 1 is disposed inside a dashboard 101 of the vehicle 100. On an upper face of the dashboard 101, an opening 101a is provided. The vehicular display apparatus 1 projects display light of an image onto a windshield 102 through this opening 101a. The windshield 102 is a reflector that is located in front of the eye point 201 in the vehicle 100. The windshield 102 has, for example, a semitransmission characteristic, and reflects, to the eye point 201, display light that has entered from the vehicular display apparatus 1. The driver 200 recognizes, as the virtual image VI, an image reflected by the windshield 102. The driver 200 recognizes the virtual image VI as if there were the virtual image VI in front of the windshield 102.

Note that herein, unless otherwise specified, a "forward/backward direction" refers to a vehicle forward/backward direction of the vehicle 100 mounted with the vehicular display apparatus 1. In addition, unless otherwise specified, a "vehicle width direction" refers to a vehicle width direction of the vehicle 100, and an "upward/downward direction" refers to a vehicle upward/downward direction of the vehicle 100.

As illustrated in FIG. 2, the vehicular display apparatus 1 includes an obtaining unit 2, an ON/OFF checking unit 3, a situation identifying unit 4, a congestion degree processor 5, a display processor 6, and a display 7. The obtaining unit 2, the ON/OFF checking unit 3, a situation identifying unit 4, the congestion degree processor 5, and the display processor 6 are, for example, a computer that includes an arithmetic unit, a storage, a communication interface, or the like. The obtaining unit 2, the ON/OFF checking unit 3, the situation identifying unit 4, the congestion degree processor 5, and the display processor 6 operate, for example, according to a program that has been stored in advance.

The display 7 is a device that displays an image in front of the driver 200 of the vehicle 100. The display 7 according to the present embodiment is a projector that displays a virtual image in such a way that the virtual image is superimposed onto a foreground of the vehicle 100, by using display light projected onto the windshield 102 of the vehicle 100. As illustrated in FIG. 1, the display 7 includes an image projecting unit 71 and a mirror 72. The image projecting unit 71 generates display light of an image obtained from the display processor 6.

The image projecting unit 71 is, for example, a liquid crystal display device such as a thin film transistor-liquid crystal display (TFT-LCD). In this case, the image projecting unit 71 includes a liquid crystal display unit that displays an image, and emits display light from the liquid crystal display unit. However, the image projecting unit 71 is not limited to the liquid crystal display device, and may be, for example, a device that generates an image on a screen by using a laser beam. In this case, the image projecting unit 71 emits display light of an image from the screen.

The mirror 72 is a reflection member that reflects, to the windshield 102, display light that has been emitted from the image projecting unit 71. The mirror 72 includes a reflection surface that reflects display light. A shape of the reflection surface is, for example, a free curved surface. It is preferable that the mirror 72 be a magnifying mirror that magnifies and reflects display light. The windshield 102 reflects display light to the eye point 201 of the driver 200. The mirror 72 reflects display light to a region that is superimposed onto the foreground of the vehicle 100 in the windshield 102. Therefore, a formed virtual image VI is displayed in such a way that the virtual image VI is superimposed onto the foreground of the vehicle 100.

The obtaining unit 2 obtains various types of information. The obtaining unit 2 includes peripheral information obtaining units 21 and 22, a traveling information obtaining unit 23, a navigation information obtaining unit 24, a driver state obtaining unit 25, and an operation input receiving unit 26.

The peripheral information obtaining unit 21 obtains preceding vehicle information, peripheral traffic information, and peripheral road information by using a communication unit 110 of the vehicle 100. The communication unit 110 performs vehicle-to-everything (V2X) communication. The communication unit 110 can perform wireless communication with an infrastructure system, for example, in road-to-vehicle communication. The communication unit 110 can perform wireless communication with another vehicle through inter-vehicle communication. In addition, the communication unit 110 may be connected to a cloud network in wireless communication with a communication base station. The communication unit 110 performs wireless communication according to an arbitrary communication standard.

The peripheral information obtaining unit 21 obtains preceding vehicle information, peripheral traffic information, and peripheral road information in V2X communication. The preceding vehicle information includes traveling information of a preceding vehicle including the vehicle speed of the preceding vehicle, peripheral information obtained by a sensor of the preceding vehicle, traveling information of a further preceding vehicle including the vehicle speed of the further preceding vehicle, and peripheral information obtained by a sensor of the further preceding vehicle. The peripheral traffic information includes information relating to another peripheral vehicle including a preceding vehicle and a further preceding vehicle, information relating to a peripheral pedestrian, information relating to a peripheral obstacle or the like, and information relating to peripheral road construction. The peripheral road information includes information relating to a peripheral traffic light and information relating to a peripheral intersection. The information relating to a traffic light includes a current display state, a remaining time of a green light, and the like of a corresponding traffic light.

The peripheral information obtaining unit 22 obtains preceding vehicle information, peripheral traffic information, and peripheral road information from a first on-vehicle sensor 120. The first on-vehicle sensor 120 includes a sensor that detects an object around the vehicle 100. Examples of such a sensor include a laser imaging detection and ranging (LiDAR) and a radar sensor. The first on-vehicle sensor 120 can detect, for example, a relative position, a range, or a relative speed of a preceding vehicle relative to the vehicle 100. In addition, the first on-vehicle sensor 120 can detect, for example, a shape or a size of a preceding vehicle. The first on-vehicle sensor 120 may include a camera that images a periphery of the vehicle 100. The peripheral information obtaining unit 22 can obtain a preceding vehicle, peripheral traffic information, and peripheral road information on the basis of an image captured by the camera.

The traveling information obtaining unit 23 obtains traveling information of the vehicle 100. Examples of the traveling information include vehicle speed and a steering angle of the vehicle 100. The traveling information obtaining unit 23 obtains traveling information, for example, from a vehicle speed sensor or a steering angle sensor that is mounted on the vehicle 100.

The navigation information obtaining unit 24 obtains a current traveling location of the vehicle 100, map information, or guide route information. The navigation information obtaining unit 24 obtains various types of information, for example, from a navigation device 130 mounted on the vehicle 100. The navigation information obtaining unit 24 may obtain information from a portable navigation device or a navigation application of a smartphone. The navigation information obtaining unit 24 obtains information relating to a peripheral traffic light, information relating to a peripheral intersection, information relating to an own vehicle position of the vehicle 100, map information, or the like.

The driver state obtaining unit 25 obtains a driver's state from a second on-vehicle sensor 140. The second on-vehicle sensor 140 includes, for example, a camera that is disposed in front of the driver 200. The second on-vehicle sensor 140 detects a state of the driver 200 by performing image recognition. Examples of the driver's state include a line-of-sight direction of the driver 200, a posture of the driver 200, and a gesture of the driver 200.

The operation input receiving unit 26 receives an operation input performed on a switch 150. The switch 150 is a switch that designates whether a virtual image of the obstacle information described below will be displayed. The switch 150 is configured to be able to select any one of an ON state and an OFF state. The operation input receiving unit 26 holds a state selected by the switch 150. In a case where the ON state has been selected by the switch 150, the vehicular display apparatus 1 displays a virtual image of obstacle information. In contrast, in a case where the OFF state has been selected by the switch 150, the vehicular display apparatus 1 does not display a virtual image of obstacle information.

The ON/OFF checking unit 3 obtains, from the operation input receiving unit 26, an operation input to the switch 150. The ON/OFF checking unit 3 determines whether a virtual image of obstacle information will be displayed, on the basis of information obtained from the operation input receiving unit 26.

The situation identifying unit 4 identifies a current situation of the vehicle 100. More specifically, the situation identifying unit 4 determines whether a current situation corresponds to a situation that causes a display of a virtual image of obstacle information, on the basis of information obtained by the obtaining unit 2. FIG. 3 illustrates an example of a situation that causes a display of a virtual image of obstacle information. The vehicle 100 serving as the own vehicle is located on this side of an intersection Cr. At the intersection Cr, the green traffic light is on in a traffic light for vehicles SG1 in a direction of advancing of the vehicle 100, and the red traffic light is on in a traffic light for pedestrians SG2.

On another side of the intersection Cr, a preceding vehicle 300 is stopped. Just ahead of the preceding vehicle 300, there is a further preceding vehicle 310. The preceding vehicle 300 fails to move forward because an inter-vehicle distance from the preceding vehicle 300 to the further preceding vehicle 310 is short. There is not enough space for the vehicle 100 behind the preceding vehicle 300, and therefore the vehicle 100 is waiting on this side of the intersection Cr. In the situation of FIG. 3, there is a pedestrian 400 who is crossing a crosswalk, and therefore traffic congestion has occurred on the other side of the intersection Cr when viewed from the vehicle 100. The driver 200 of the vehicle 100 fails to view the cause of traffic congestion or a state of traffic congestion. In such a situation, it is difficult for the driver 200 to correctly judge whether the vehicle 100 may be made to enter the intersection Cr. In particular, in a case where the preceding vehicle 300 is a large-sized vehicle or a vehicle having a great vehicle height, it is difficult for the driver 200 to obtain information relating to a front side.

The vehicular display apparatus 1 according to the present embodiment causes a display of information relating to an obstacle that hinders the advancing of the preceding vehicle 300, as described below. In the description below, information relating to an obstacle that hinders the advancing of the preceding vehicle 300 is simply referred to as "obstacle information". The vehicular display apparatus 1 according to the present embodiment causes a virtual image of obstacle information to be displayed in such a way that the virtual image is superimposed onto the preceding vehicle 300. In the situation illustrated in FIG. 3, an obstacle that directly hinders the advancing of the preceding vehicle 300 is the further preceding vehicle 310. The vehicular display apparatus 1 causes a display of a virtual image that indicates direct obstacle information, for example, as described below.

FIG. 4 illustrates an example of an image 30 displayed by the vehicular display apparatus 1. The image 30 includes a vehicle image 31 and a frame image 32. The vehicle image 31 is an image imitating the further preceding vehicle 310. The frame image 32 is a frame-shaped image surrounding the vehicle image 31. By displaying the vehicle image 31 inside the frame image 32, the driver 200 easily recognizes that the vehicle image 31 is not an entity but a virtual image. By the image 30 displayed, the driver 200 can know the existence of the further preceding vehicle 310 that hinders the advancing of the preceding vehicle 300. Therefore, the vehicular display apparatus 1 can provide the driver 200 with appropriate information for sizing up a situation.

An operation of the vehicular display apparatus 1 is described with reference to the flowchart of FIG. 5 or the like. In step S10, the obtaining unit 2 obtains various types of information. When the peripheral information obtaining units 21 and 22, the traveling information obtaining unit 23, the navigation information obtaining unit 24, the driver state obtaining unit 25, and the operation input receiving unit 26 complete the obtaining of information, the processing proceeds to step S20.

In step S20, the ON/OFF checking unit 3 checks whether a display ON state is selected. The ON/OFF checking unit 3 obtains, from the operation input receiving unit 26, information relating to which of the display ON state and a display OFF state is selected. As a result of determination in step S20, in a case where affirmative determination is made to determine that the display ON state is selected, the processing proceeds to step S30. In a case where negative determination is made, the flowchart is terminated.

In step S30, the ON/OFF checking unit 3 determines whether a request gesture is absent. The request gesture is a motion of the driver 200 to request that a virtual image of obstacle information be displayed. The request gesture has been registered in advance, for example, in the vehicular display apparatus 1. The ON/OFF checking unit 3 according to the present embodiment determines the presence/absence of the request gesture on the basis of the determination table illustrated in FIG. 8. The ON/OFF checking unit 3 performs the determination of step S30 on the basis of a line-of-sight direction of the driver 200 and a gesture of the driver 200 that have been obtained from the driver state obtaining unit 25.

Examples of a pattern of the request gesture include pattern A, pattern B, and pattern C. Pattern A is a motion of the driver 200 to direct a line of sight to the preceding vehicle 300. Pattern B is a combination of the motion of the driver 200 to direct a line of sight to the preceding vehicle 300 and a motion of the driver 200 to point at the preceding vehicle 300. Pattern C is a combination of the motion of the driver 200 to direct a line of sight to the preceding vehicle 300 and a motion of the driver 200 to look into the preceding vehicle 300.

For example, in a case where the driver 200 has made at least one of the motions of pattern A, pattern B, and pattern C, the ON/OFF checking unit 3 determines that the request gesture is present. In contrast, in a case where the driver 200 has not made any of the motions of pattern A, pattern B, and pattern C, the ON/OFF checking unit 3 determines that the request gesture is absent. As a result of determination in step S30, in a case where affirmative determination is made to determine that the request gesture is absent, the processing proceeds to step S40. In a case where negative determination is made to determine that the request gesture is present, the processing proceeds to step S60.

In step S40, the situation identifying unit 4 evaluates the necessity of assistance in advancing at an intersection. More specifically, the situation identifying unit 4 determines whether all conditions of condition (a) to condition (d) described below are satisfied. Respective conditions are described with reference to FIG. 9.

Condition (a) is that the vehicle 100 is stopped or is moving slowly on this side of the intersection Cr. In the determination of condition (a), processing is performed to detect that the vehicle 100 is a first vehicle located on this side of an intersection and that the vehicle 100 is stopped or is moving slowly. The situation identifying unit 4 recognizes the preceding vehicle 300 by using the first on-vehicle sensor 120, and measures a distance from the vehicle 100 to the preceding vehicle 300. Further, the situation identifying unit 4 obtains map information and a current location of the vehicle 100 from the navigation information obtaining unit 24. The situation identifying unit 4 performs an arithmetic operation to determine whether the vehicle 100 is a first vehicle located on this side of the intersection Cr, on the basis of the distance to the preceding vehicle 300 and the current location of the vehicle 100. In addition, the situation identifying unit 4 performs an arithmetic operation to determine whether the preceding vehicle 300 is not located on this side of the intersection Cr, on the basis of the distance to the preceding vehicle 300 and the current location of the vehicle 100.

In a case where the vehicle 100 is located on this side of the intersection Cr and the preceding vehicle 300 is not located on this side of the intersection Cr, the situation identifying unit 4 determines that the vehicle 100 is a first vehicle located on this side of the intersection Cr. Note that the situation identifying unit 4 may determine whether the vehicle 100 is a first vehicle located on this side of the intersection Cr, on the basis of an image obtained by capturing a front side of the vehicle 100. The situation identifying unit 4 can determine that the vehicle 100 is stopped and that the vehicle 100 is moving slowly, on the basis of the vehicle speed of the vehicle 100 that has been obtained from the traveling information obtaining unit 23. Note that moving slowly means a traveling state where a vehicle or the like is traveling at a speed that enables an immediate stop.

Condition (b) is that the preceding vehicle 300 is stopped or is moving slowly on the other side of the intersection Cr. In the determination of condition (b), processing is performed to detect whether the preceding vehicle 300 is located on the other side of the intersection Cr. The situation identifying unit 4 recognizes the preceding vehicle 300 by using the first on-vehicle sensor 120, and measures a distance from the vehicle 100 to the preceding vehicle 300. The situation identifying unit 4 obtains map information and a current location of the vehicle 100 from the navigation information obtaining unit 24. The situation identifying unit 4 performs an arithmetic operation to determine whether the preceding vehicle 300 is located on the other side of the intersection Cr, on the basis of the distance to the preceding vehicle 300 and the current location of the vehicle 100.

Condition (c) is that there is no space that the vehicle 100 can enter, behind the preceding vehicle 300. In the determination of condition (c), processing is performed to detect whether there is enough space. The situation identifying unit 4 recognizes the preceding vehicle 300 by using the first on-vehicle sensor 120, and measures a distance from the vehicle 100 to the preceding vehicle 300. A distance L1 from the vehicle 100 to a crosswalk Cw located on the other side of the intersection Cr is calculated on the basis of an image obtained from the camera of the first on-vehicle sensor 120.

The situation identifying unit 4 calculates a length L2 of a space behind the preceding vehicle 300 on the basis of the distance L1 to the crosswalk Cw. The length L2 of the space is a difference between the distance from the vehicle 100 to the preceding vehicle 300 and the distance L1 from the vehicle 100 to the crosswalk Cw. In a case where the length L2 of the space has a value that is less than a threshold, the situation identifying unit 4 determines that there is no space that the vehicle 100 can enter, behind the preceding vehicle 300. The threshold is, for example, the sum of the total length of the vehicle 100 and a minimum necessary inter-vehicle distance.

Condition (d) is that the green traffic light is on in the traffic light for vehicles SG1 in a direction of advancing of the vehicle 100. The situation identifying unit 4 obtains a state of the traffic light for vehicles SG1 from the peripheral information obtaining unit 21. Note that the situation identifying unit 4 may identify a situation in consideration of a remaining time of the green traffic light. For example, in a case where a remaining time of the green traffic light is less than or equal to a predetermined time, the situation identifying unit 4 may determine that the necessity of assistance in advancing exists.

The situation identifying unit 4 determines whether each of condition (a) to condition (d) is satisfied. As a result of determination in step S40, in a case where affirmative determination is made to determine that all of condition (a) to condition (d) are satisfied, the processing proceeds to step S50. In a case where negative determination is made to determine that at least one condition is not satisfied, the flowchart is terminated.

In step S50, the situation identifying unit 4 evaluates a front field of view. More specifically, the situation identifying unit 4 determines whether condition (p) or condition (q) described below is satisfied. Condition (p) and condition (q) are conditions under which it can be considered that a front field of view of the driver 200 is obstructed.

Condition (p) is that a vehicle type of the preceding vehicle 300 corresponds to a predetermined vehicle type that has been specified in advance. The predetermined vehicle type is a vehicle type that is likely to obstruct the front field of view of the driver 200, and an example is a large-sized vehicle type such as trucks, buses, or station wagons. The predetermined vehicle type satisfies at least one of a vehicle width being greater than a predetermined width and a vehicle height being greater than a predetermined height. The vehicle type of the preceding vehicle 300 is estimated by recognizing a vehicle type on the basis of a front image captured by the camera.

Condition (q) is that a vehicle width or a vehicle height of the preceding vehicle 300 is greater than or equal to a certain size. The vehicle width and the vehicle height of the preceding vehicle 300 are estimated by recognizing a vehicle size on the basis of a front image captured by the camera. As illustrated in FIG. 10, a vehicle width W1 and a vehicle height H1 of the preceding vehicle 300 are calculated. A size of the preceding vehicle 300 is calculated on the basis of, for example, a size of the preceding vehicle 300 in an image and a distance from the vehicle 100 to the preceding vehicle 300. In a case where at least one condition is satisfied from among a condition that the vehicle width of the preceding vehicle 300 is greater than or equal to a predetermined width and a condition that the vehicle height of the preceding vehicle 300 is greater than or equal to a predetermined height, the situation identifying unit 4 determines that condition (q) is satisfied.

As a result of step S50, in a case where affirmative determination is made to determine that condition (p) or condition (q) is satisfied, the processing proceeds to step S60. In a case where negative determination is made to determine that none of the conditions is satisfied, the flowchart is terminated.

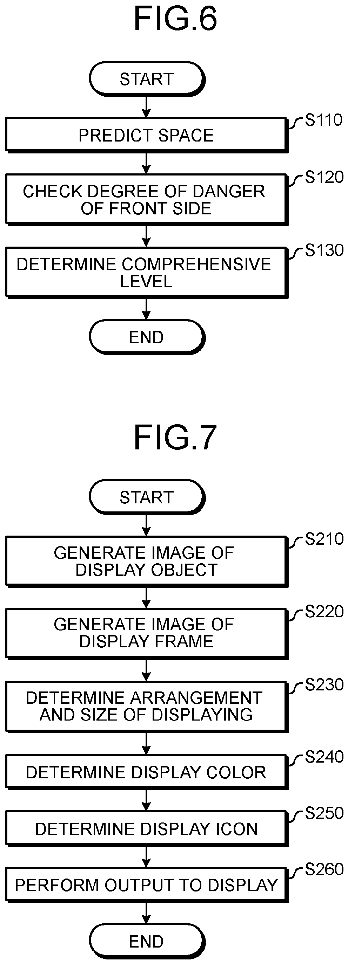

In step S60, the congestion degree processor 5 determines a degree of traffic congestion. The content of determining the degree of traffic congestion is described with reference to the flowchart of FIG. 6. In step S110, the congestion degree processor 5 estimates a space in front of the preceding vehicle 300. In a case where there is a space Sp in front of the preceding vehicle 300, as illustrated in FIG. 11, it can be considered that a size of the space Sp is reflected in a traveling state of the preceding vehicle 300. The congestion degree processor 5 estimates a level of the space Sp, as described below.

As illustrated in FIG. 12, the congestion degree processor 5 evaluates the level of the space Sp in three stages, a first level to a third level. The first level is a level at which it can be considered that the space Sp is smallest, and the third level is a level at which it can be considered that the space Sp is largest. The congestion degree processor 5 determines a space level on the basis of the speed of the preceding vehicle 300 that has been obtained from the first on-vehicle sensor 120. In a case where the preceding vehicle 300 is stopped, the congestion degree processor 5 determines that the space level is the first level.

In a case where the preceding vehicle 300 is moving slowly at a vehicle speed that is less than a predetermined value, the congestion degree processor 5 evaluates the level in accordance with acceleration/deceleration. Specifically, the congestion degree processor 5 determines that the space level is one in a case where the preceding vehicle 300 is decelerating, determines that the space level is two in a case where the preceding vehicle 300 is traveling at a constant speed, and determines that the space level is three in a case where the preceding vehicle 300 is accelerating.

In a case where the preceding vehicle 300 is moving slowly at a speed that is greater than or equal to the predetermined value, the congestion degree processor 5 determines that the space level is three. In step S110, when estimation of a space is completed, the processing proceeds to step S120.

In step S120, the congestion degree processor 5 checks a degree of danger of a front side. The congestion degree processor 5 obtains, from the peripheral information obtaining unit 21, information relating to an obstacle in front of the preceding vehicle 300. As illustrated in FIG. 11, there is a high probability that the advancing of the preceding vehicle 300 will be hindered in a case where there is the space Sp in front of the preceding vehicle 300, but there is an obstacle such as the pedestrian 400 or the like.

As illustrated in FIG. 13, the congestion degree processor 5 evaluates a degree-of-danger level in front of the preceding vehicle 300 in three stages, a first level to a third level. The first level is a level at which it can be considered that a degree of danger is highest, and the third level is a level at which it can be considered that the degree of danger is lowest. The congestion degree processor 5 obtains information relating to an obstacle from the peripheral information obtaining unit 21. The information relating to an obstacle may be information obtained from the preceding vehicle 300 in inter-vehicle communication, or may be information obtained from a system on an infrastructure side in road-to-vehicle communication.

In a case where there is an obstacle on a course of the preceding vehicle 300, the congestion degree processor 5 determines that the degree-of-danger level is one. Examples of the obstacle on the course include the pedestrian 400 who is crossing in front of the preceding vehicle 300 and an obstacle in front of the preceding vehicle 300. In a case where there is an obstacle right near the course of the preceding vehicle 300, the congestion degree processor 5 determines that the degree-of-danger level is two. Examples of the obstacle right near the course include the pedestrian 400 who is about to cross in front of the preceding vehicle 300, a pedestrian who is crossing an adjacent traffic lane, and an obstacle on an adjacent traffic lane. In a case where there are no obstacles that affect the course of the preceding vehicle 300, the congestion degree processor 5 determines that the degree-of-danger level is three. In step S120, when a level of a degree of danger is determined, the processing proceeds to step S130.

In step S130, the congestion degree processor 5 determines a comprehensive level. The comprehensive level is a level value obtained by integrating the space level and the degree-of-danger level. The comprehensive level indicates a probability that a space that the vehicle 100 can enter will be generated on the other side of the intersection Cr. As illustrated in FIG. 14, the congestion degree processor 5 evaluates the comprehensive level in three stages, a first level to a third level. The first level is a level at which it is considered that there is lowest probability that a space for the vehicle 100 will be generated on the other side of the intersection Cr. The third level is a level at which it is considered that there is highest probability that a space for the vehicle 100 will be generated on the other side of the intersection Cr.

As illustrated in FIG. 14, in a case where the space level is the first level or in a case where the degree-of-danger level is the first level, it is determined that the comprehensive level is one. In a case where none of the space level and the degree-of-danger level is the first level and the total value of a value of the space level and a value of the degree-of-danger level is 5 or less, it is determined that the comprehensive level is two. In a case where both the space level and the degree-of-danger level are the third level, it is determined that the comprehensive level is three. In step S130, when the comprehensive level has been determined, the determination of a degree of traffic congestion is terminated, and the processing proceeds to step S70.

In step S70, the display processor 6 performs display processing. The content of display processing is described with reference to the flowchart of FIG. 7. In step S210, the display processor 6 generates an image of a display object. Here, the generation of an image is described in a case where the display object is the further preceding vehicle 310. The display processor 6 generates an image, for example, from a camera video of the preceding vehicle 300. More specifically, the display processor 6 obtains an image of the further preceding vehicle 310 that has been captured by the preceding vehicle 300, by using the peripheral information obtaining unit 21. In this case, the image of the further preceding vehicle 310 is transmitted from the preceding vehicle 300 to the vehicle 100 in inter-vehicle communication.

The display processor 6 extracts a pixel range of the further preceding vehicle 310 from the obtained image, and processes an image. An image after processing is, for example, the vehicle image 31 illustrated in FIG. 4. The display processor 6 performs simplification, for example, by performing binarization on the extracted pixel range of the further preceding vehicle 310. By performing simplification, it is clarified that an image to be displayed is not an actual view of the further preceding vehicle 310.

Note that the display processor 6 may obtain information relating to an object that the preceding vehicle 300 has recognized by using LiDAR or the like. A display object in this case is the object that has been recognized by the preceding vehicle 300. The display processor 6 may use, as an image of a display object, an image that has been extracted and processed by the preceding vehicle 300.

The display processor 6 may obtain information relating to an object in front of the preceding vehicle 300 from a system on the infrastructure side. An image of a display object in this case is, for example, an image that has been prepared in advance. For example, in a case where the object in front of the preceding vehicle 300 is a vehicle, the display processor 6 uses, as an image of a display object, a vehicle image that has been stored in advance. In step S210, when an image of a display object is generated, the processing proceeds to step S220.

In step S220, the display processor 6 generates an image of a display frame. The image of the display frame is, for example, the frame image 32 illustrated in FIG. 4. It is preferable that the image of the display frame be an image that causes a feeling of looking into the other side through the image of the display frame. Examples of such an image include an image having a shape of a magnifying glass and an image having a shape of a window. In step S220, when the image of the display frame is generated, the processing proceeds to step S230.

In step S230, the display processor 6 determines arrangement and a size of displaying. The display processor 6 determines a display position in such a way that each of the image of the display object and the image of the display frame is superimposed onto the preceding vehicle 300. FIG. 15 illustrates an image that corresponds to a comprehensive level. In FIG. 15, a left-hand side indicates arrangement and a size of the image 30 in a case where the comprehensive level is three. In FIG. 15, the center indicates arrangement and a size of the image 30 in a case where the comprehensive level is two. In FIG. 15, a right-hand side indicates arrangement and a size of the image 30 in a case where the comprehensive level is one.

The display processor 6 according to the present embodiment adjusts arrangement and a size of the vehicle image 31 in such a way that the entirety of the vehicle image 31 is superimposed onto the preceding vehicle 300, as illustrated in FIG. 15. In addition, the display processor 6 adjusts arrangement and a size of the frame image 32 in such a way that roughly the entirety of the frame image 32 is superimposed onto the preceding vehicle 300. Center positions in a horizontal direction of the vehicle image 31 and the frame image 32 are, for example, the center of the preceding vehicle 300. The center positions in the horizontal direction of the vehicle image 31 and the frame image 32 may be the center of a traffic lane on which the vehicle 100 is traveling.

Center positions in a vertical direction of the vehicle image 31 and the frame image 32 may be determined, for example, according to a distance from the vehicle 100 to the further preceding vehicle 310. The center positions of the vehicle image 31 and the frame image 32 may be a vanishing point when viewed from the driver 200.

Note that it is preferable that the vehicle image 31 be arranged to be superimposed onto a position of the further preceding vehicle 310 when viewed from the vehicle 100. In other words, it is preferable that a position of the vehicle image 31 be a position of the further preceding vehicle 310 in a case where the preceding vehicle 300 is seen through.

Note that a size of the vehicle image 31 may be decreased as a distance from the preceding vehicle 300 to the further preceding vehicle 310 increases. A size of the vehicle image 31 may be the same as an apparent size of the further preceding vehicle 310 when viewed from the vehicle 100. In other words, the size of the vehicle image 31 may be the same as a size of the further preceding vehicle 310 in a case where the preceding vehicle 300 is seen through.

A size of the frame image 32 is fixed, for example, regardless of a distance from the vehicle 100 to the further preceding vehicle 310. In such a case, a ratio of a size of the vehicle image 31 to the size of the frame image 32 changes, for example, according to a degree of traffic congestion. Stated another way, by displaying the vehicle image 31 in a large size, it is indicated that a front side of the preceding vehicle 300 has a high degree of traffic congestion. As illustrated in FIG. 15, in a case where the comprehensive level has a value of 1, the vehicle image 31 is displayed to cover the entirety of a region surrounded by the frame image 32. An end of the vehicle image 31 in the horizontal direction overlaps the frame image 32. In such a display, it is intuitively understood that the other side of the intersection Cr has a high degree of traffic congestion. In step S230, when a position and a size of displaying is determined, the processing proceeds to step S240.

Note that the vehicular display apparatus 1 may change a display distance of the vehicle image 31 according to a degree of traffic congestion. The display distance is a distance from the eye point 201 to an image formation position of the vehicle image 31. The vehicular display apparatus 1 according to the present embodiment is an augmented reality head-up display (AR-HUD), and can change the display distance. The vehicular display apparatus 1 has, for example, a mechanism of changing an optical path length of display light. As an example, the display 7 may have a mechanism of making an optical path length from the image projecting unit 71 to the mirror 72 variable.

The vehicular display apparatus 1 decreases the display distance, for example, as the degree of traffic congestion increases. In this case, the vehicular display apparatus 1 makes the display distance longest in a case where the comprehensive level has a value of 3, and makes the display distance shortest in a case where the comprehensive level has a value of 1. In other words, in a case where the comprehensive level has a value of 3, an image formation position of the vehicle image 31 when viewed from the eye point 201 is farthest. On the other hand, in a case where the comprehensive level has a value of 1, an image formation position of the vehicle image 31 when viewed from the eye point 201 is nearest. The driver 200 can know a degree of traffic congestion of a front side according to depth perception based on the display distance.

The vehicular display apparatus 1 can change at least one of a size and the display distance of the vehicle image 31 according to the degree of traffic congestion or the like. Stated another way, the vehicular display apparatus 1 may change both the size and the display distance of the vehicle image 31, or may change any of the size and the display distance of the vehicle image 31. The vehicular display apparatus 1 determines the size and the display distance of the vehicle image 31, for example, on the basis of at least one of a distance from the vehicle 100 to the further preceding vehicle 310 and the degree of traffic congestion.

In step S240, the display processor 6 determines display color. The display processor 6 determines the display color of the image 30, for example, according to a value of the comprehensive level. In a case where the comprehensive level has a value of 3, the display processor 6 determines that the display color of the image 30 is green. In a case where the comprehensive level has a value of 2, the display processor 6 determines that the display color of the image 30 is yellow. In a case where the comprehensive level has a value of 1, the display processor 6 determines that the display color of the image 30 is red. In step S240, when the display color is determined, the processing proceeds to step S250.

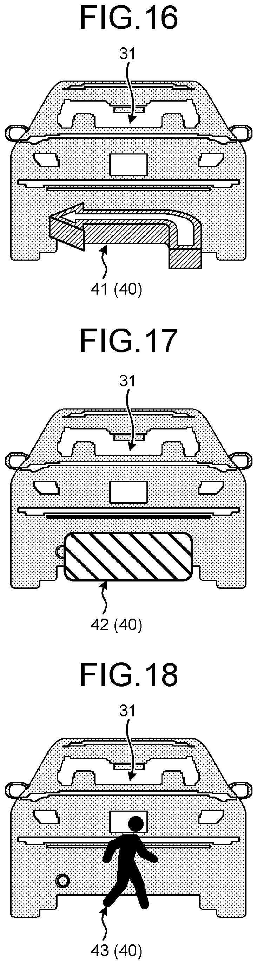

In step S250, the display processor 6 determines an icon 40 to be displayed. The icon 40 is an image indicating the cause of traffic congestion, and is an image of obstacle information. The icon 40 includes a left-turn icon 41 illustrated in FIG. 16, a construction icon 42 illustrated in FIG. 17, and a pedestrian icon 43 illustrated in FIG. 18. The left-turn icon 41 is an image having a shape of an arrow bent leftward. The left-turn icon 41 indicates that traffic congestion has occurred due to a vehicle that is about to turn left. The vehicle that is about to turn left may be the further preceding vehicle 310, or may be a vehicle in front of the further preceding vehicle 310.

The illustrated construction icon 42 is an image having a striped pattern in which a black line and a yellow line are alternatively arranged. The construction icon 42 indicates that traffic congestion has occurred due to construction. The pedestrian icon 43 is an image having a shape imitating a pedestrian. The pedestrian icon 43 indicates that traffic congestion has occurred due to a pedestrian. The pedestrian icon 43 may be displayed in a case where there is a pedestrian who crosses a road in a position that is different from a crosswalk.

The icon 40 is displayed, for example, in such a way that the icon 40 is superimposed onto the vehicle image 31. By displaying the icon 40, the driver 200 can grasp a situation of a front side of the preceding vehicle 300 in more detail. In step S250, when the icon 40 is determined, the processing proceeds to step S260.

In step S260, the display processor 6 outputs an image to be displayed to the display 7. The display processor 6 outputs, to the display 7, pieces of image data, display positions, display sizes, and display colors of the image 30 and the icon 40. The display 7 displays virtual images of the image 30 and the icon 40 according to a command of the display processor 6.

Note that the vehicular display apparatus 1 may cause obstacle information to be displayed regardless of the time at which the vehicle 100 is located on this side of the intersection Cr. For example, the vehicular display apparatus 1 may cause a display of an image of obstacle information, such as the image 30 or the icon 40 in a case where the preceding vehicle 300 is a large-sized vehicle, the preceding vehicle 300 is stopped or is moving slowly, and the vehicle 100 is stopped or is moving slowly. In a case where the vehicle image 31 is displayed, the driver 200 can know that an obstacle that hinders the advancing of the preceding vehicle 300 is the further preceding vehicle 310. In a case where the icon 40 has been displayed, the driver 200 can know a cause that hinders the advancing of the preceding vehicle 300.

As described above, the vehicular display apparatus 1 according to the present embodiment includes the obtaining unit 2 and the display 7. The obtaining unit 2 obtains obstacle information serving as information relating to an obstacle that hinders the advancing of the preceding vehicle 300. The display 7 displays obstacle information in a situation where the vehicle 100 serving as the own vehicle is stopped or is moving slowly, and the preceding vehicle 300 is stopped or is moving slowly. The vehicular display apparatus 1 according to the present embodiment can report a situation ahead of the preceding vehicle 300 to the driver 200 of the vehicle 100.

The vehicular display apparatus 1 according to the present embodiment causes obstacle information to be displayed, in a case where at least one condition is satisfied from among a condition that a vehicle width of the preceding vehicle 300 is greater than or equal to a predetermined width and a condition that a vehicle height of the preceding vehicle 300 is greater than or equal to a predetermined height. Stated another way, the vehicular display apparatus 1 causes obstacle information to be displayed in a situation where a front field of view of the driver 200 is likely to be obstructed.

The display 7 according to the present embodiment is a projector that displays a virtual image of obstacle information in such a way that the virtual image is superimposed onto the preceding vehicle 300, by using display light projected onto the windshield 102 of the vehicle 100. By displaying the virtual image of the obstacle information in such a way that the virtual image is superimposed onto the preceding vehicle 300, information can be intuitively provided.

The obtaining unit 2 according to the present embodiment obtains information relating to the further preceding vehicle 310. The display 7 displays a virtual image imitating the further preceding vehicle 310, as a virtual image of obstacle information. The illustrated vehicle image 31 is an image imitating the further preceding vehicle 310. By displaying an image imitating the further preceding vehicle 310, it can be intuitively reported to the driver 200 that the advancing of the preceding vehicle 300 is hindered due to the further preceding vehicle 310.

The display 7 according to the present embodiment changes at least one of a size and the display distance of the virtual image imitating the further preceding vehicle 310 according to a degree of traffic congestion of a front side of the preceding vehicle 300. By changing at least one of the size and the display distance of the virtual image according to the degree of traffic congestion, information can be intuitively provided.

The obtaining unit 2 according to the present embodiment obtains the cause of traffic congestion that hinders the advancing of the preceding vehicle 300. The display 7 displays a virtual image indicating the cause of traffic congestion, as a virtual image of obstacle information. The illustrated icon 40 is an image indicating the cause of traffic congestion. The vehicular display apparatus 1 according to the present embodiment can provide a detailed situation to the driver 200 by displaying a virtual image indicating the cause of traffic congestion.

The vehicular display apparatus 1 according to the present embodiment includes the situation identifying unit 4 that determines whether a virtual image of obstacle information will be displayed. The situation identifying unit 4 determines to display a virtual image of obstacle information in a case where the vehicle 100 serving as the own vehicle is a first vehicle located on this side of the intersection Cr, and the preceding vehicle 300 is located on the other side of the intersection Cr. By providing obstacle information in such a situation, the driver 200 can be provided with a basis for judging whether the vehicle 100 may be made to enter the intersection Cr.

Note that the display 7 is not limited to a device that displays a virtual image VI in such a way that the virtual image VI is superimposed onto a foreground of the vehicle 100. Stated another way, the virtual image VI may be displayed in a position that does not overlap the foreground. The display 7 is not limited to a device that displays the virtual image VI. The display 7 may be, for example, a device that causes the driver 200 to visually recognize a real image displayed on a screen. In this case, a screen of the display 7 is disposed in front of the driver 200 and in a position that can be visually recognized by the driver 200. The display 7 may be, for example, part of a meter device, and may be disposed to be adjacent to the meter device.

In a case where the display 7 is a device that causes the driver 200 to visually recognize a real image, the display 7 may display an image imitating the preceding vehicle 300, and may further display the vehicle image 31 and the frame image 32 in such a way that the vehicle image 31 and the frame image 32 are superimposed onto the image imitating the preceding vehicle 300.

In a case where an obstacle that directly hinders the advancing of the preceding vehicle 300 is not the further preceding vehicle 310, the vehicular display apparatus 1 does not need to cause the vehicle image 31 to be displayed. For example, in a case where a pedestrian who is crossing just before the preceding vehicle 300 hinders the advancing of the preceding vehicle 300, the vehicular display apparatus 1 may cause the pedestrian icon 43 to be displayed, and does not need to cause the vehicle image 31 to be displayed. In a case where construction hinders the advancing of the preceding vehicle 300, the vehicular display apparatus 1 may cause the construction icon 42 to be displayed, and does not need to cause the vehicle image 31 to be displayed.

### First Variation of Embodiment

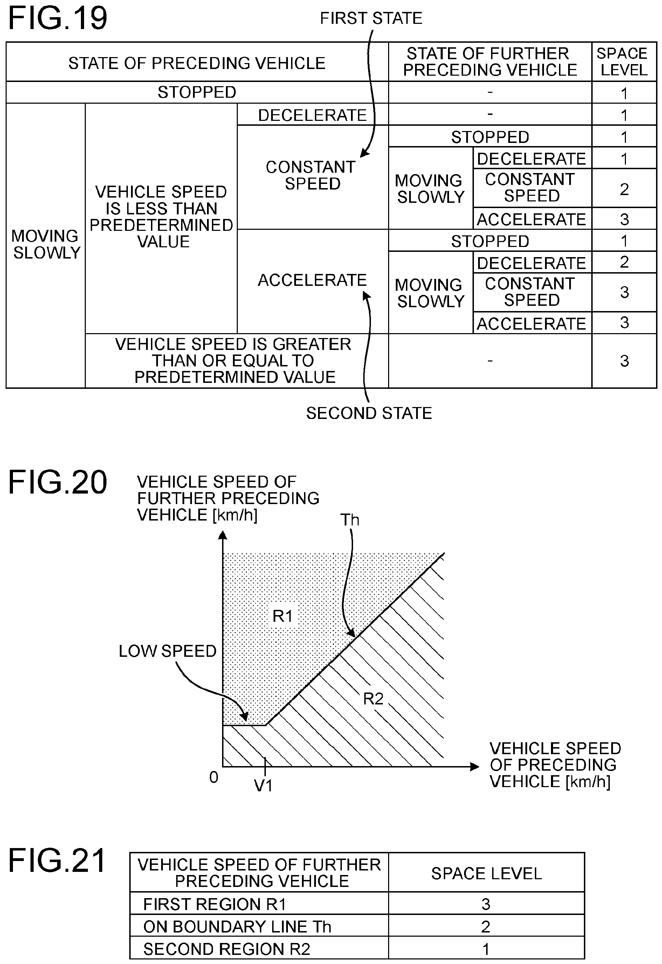

A first variation of the embodiment is described. A vehicular display apparatus 1 according to the first variation of the embodiment determines a space level in consideration of a traveling state of the further preceding vehicle 310. FIG. 19 is a diagram illustrating a table of determination of a space level according to the first variation of the embodiment. A traveling state including the vehicle speed of the further preceding vehicle 310 is obtained from the further preceding vehicle 310, for example, in inter-vehicle communication.

In a case where the preceding vehicle 300 is stopped, it is determined that the space level is one regardless of a state of the further preceding vehicle 310. In addition, in a case where the preceding vehicle 300 is moving slowly at a vehicle speed that is less than a predetermined value, and is decelerating, it is determined that the space level is one regardless of a state of the further preceding vehicle 310.

In a case where a state of the preceding vehicle 300 is the first state illustrated in FIG. 19, the space level is determined according to a state of the further preceding vehicle 310. The first state is a state where the preceding vehicle 300 is moving slowly at a constant speed that is less than a predetermined value. In the first state, in a case where the further preceding vehicle 310 is stopped, it is determined that the space level is one. In a case where the further preceding vehicle 310 is moving slowly, and is decelerating, it is determined that the space level is one. In a case where the further preceding vehicle 310 is moving slowly, and is traveling at a constant speed, it is determined that the space level is two. In a case where the further preceding vehicle 310 is moving slowly, and is accelerating, it is determined that the space level is three.

In a case where a state of the preceding vehicle 300 is the second state illustrated in FIG. 19, the space level is determined according to a state of the further preceding vehicle 310. The second state is a state where the preceding vehicle 300 is traveling at a vehicle speed that is less than a predetermined value, and is accelerating.

In the second state, in a case where the further preceding vehicle 310 is stopped, it is determined that the space level is one. In a case where the further preceding vehicle 310 is decelerating, it is determined that the space level is two. In a case where the further preceding vehicle 310 is traveling at a constant speed, or is accelerating, it is determined that the space level is three.

In a case where the preceding vehicle 300 is moving slowly at a vehicle speed that is greater than or equal to the predetermined value, it is determined that the space level is three regardless of a state of the further preceding vehicle 310. By reflecting a traveling state of the further preceding vehicle 310 in the space level, the driver 200 can be provided with appropriate information.

Note that, as described with reference to FIGS. 20 and 21, a difference in speed between the further preceding vehicle 310 and the preceding vehicle 300 may be reflected in the space level. In FIG. 20, a horizontal axis indicates the vehicle speed of the preceding vehicle 300, and a vertical axis indicates the vehicle speed of the further preceding vehicle 310. In the map of FIG. 20, a boundary line Th for determination of the space level has been specified. In a region where the vehicle speed of the preceding vehicle 300 is less than or equal to VI, a value of the boundary line Th is fixed. Speed VI is a speed at which it can be considered that a vehicle is hardly moving, and is, for example, a speed that is lower than a traveling speed of creeping. Speed VI has, for example, a value that is less than 5 km/h. In a region where the vehicle speed of the preceding vehicle 300 is higher than VI, the boundary line Th is a straight line having an inclination of 1. This inclined line is, for example, a straight line that passes through an origin.

In the map, a first region R1 and a second region R2 have been set. The first region R1 is a region where the vehicle speed of the further preceding vehicle 310 is higher than the boundary line Th. The second region R2 is a region where the vehicle speed of the further preceding vehicle 310 is lower than the boundary line Th. In the first region R1, it can be considered that an inter-vehicle distance between the further preceding vehicle 310 and the preceding vehicle 300 has an increase tendency. In the second region R2, it can be considered that an inter-vehicle distance between the further preceding vehicle 310 and the preceding vehicle 300 has a decrease tendency.

The congestion degree processor 5 determines the space level according to a location of a point, which is specified by a combination of the vehicle speed of the preceding vehicle 300 and the vehicle speed of the further preceding vehicle 310, on the map. In a case where the vehicle speed of the further preceding vehicle 310 is located in the first region R1, the congestion degree processor 5 determines that the space level is three. In addition, in a case where the vehicle speed of the further preceding vehicle 310 has a value on the boundary line Th, it is determined that the space level is two. In a case where the vehicle speed of the further preceding vehicle 310 is located in the second region R2, it is determined that the space level is one.

### Second Variation of Embodiment

Shapes of the vehicle image 31 and the frame image 32 are not limited to shapes that haven been described as an example in the embodiment. The shape of the vehicle image 31 may change according to a vehicle type of the further preceding vehicle 310. A type and a shape of the icon 40 are not limited to a type and a shape that have been described as an example in the embodiment. For example, in a case where traffic congestion has occurred due to an accident, an icon 40 indicating an accident may be displayed. In a case where traffic congestion has occurred due to a disabled car, an icon 40 indicating a disabled car may be displayed.

Pieces of content disclosed in the embodiment and the variations that have been described above can be appropriately combined and implemented.

A vehicular display apparatus according to the embodiment causes a display of information relating to an obstacle that hinders the advancing of a preceding vehicle, in a situation where the own vehicle is stopped or is moving slowly, and the preceding vehicle is stopped or is moving slowly. The vehicular display apparatus according to the embodiment exhibits an effect that a situation of a front side of a preceding vehicle can be reported to a driver.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicular display apparatus (1) comprising:
an obtaining unit (2) configured to obtain obstacle information, the obstacle information being information relating to an obstacle that hinders advancing of a preceding vehicle (300); and
a display (7) configured to display the obstacle information in a situation where an own vehicle (100) is stopped or is moving slowly, and the preceding vehicle (300) is stopped or is moving slowly.

2. The vehicular display apparatus (1) according to claim 1, wherein
the obstacle information is displayed in a case where at least one condition is satisfied from among a condition that a vehicle width (W1) of the preceding vehicle (300) is greater than or equal to a predetermined width and a condition that a vehicle height (HI) of the preceding vehicle (300) is greater than or equal to a predetermined height.

3. The vehicular display apparatus (1) according to claim 1 or 2, wherein
the display (7) includes a projector that displays a virtual image of the obstacle information in such a way that the virtual image is superimposed onto the preceding vehicle (300), by using display light projected onto a windshield (102) of the own vehicle (100).

4. The vehicular display apparatus (1) according to claim 3, wherein
the obtaining unit (2) obtains information relating to a further preceding vehicle (310) that travels in front of the preceding vehicle (300), and
the display (7) displays a virtual image imitating the further preceding vehicle (310), as the virtual image of the obstacle information.

5. The vehicular display apparatus (1) according to claim 4, wherein
the display (7) changes at least one of a size and a display distance of the virtual image imitating the further preceding vehicle (310) according to a degree of traffic congestion ahead of the preceding vehicle (300).

6. The vehicular display apparatus (1) according to any one of claims 3 to 5, wherein
the obtaining unit (2) obtains a cause of traffic congestion that hinders the advancing of the preceding vehicle (300), and
the display (7) displays a virtual image indicating the cause of the traffic congestion, as the virtual image of the obstacle information.

7. The vehicular display apparatus (1) according to any one of claims 3 to 6, further comprising:
a situation identifying unit (4) that determines whether the virtual image of the obstacle information will be displayed, wherein
the situation identifying unit (4) determines to display the virtual image of the obstacle information, in a case where the own vehicle (100) is a first vehicle that is located on this side of an intersection (Cr), and the preceding vehicle (300) is located on another side of the intersection (Cr).
